# EUROPÄISCHE PATENTSCHRIFT

(11) **EP 0 835 175 B1**
(45) Veröffentlichungstag und Bekanntmachung des Hinweises auf die Patenterteilung: **18.08.1999**
(21) Anmeldenummer: 96923882.3
(22) Anmeldetag: 21.06.1996
(51) Int. Cl.: B29B 15/12

(54) **VORRICHTUNG UND VERFAHREN ZUR IMPRÄGNIERUNG VON FASERSTRÄNGEN MIT KUNSTSTOFFMATERIAL**
DEVICE AND PROCESS FOR IMPREGNATING ROVINGS WITH PLASTIC MATERIAL
PROCEDE ET DISPOSITIF POUR L'IMPREGNATION DE ROVING PAR UNE MATIERE PLASTIQUE

(30) Priorität: 28.06.1995 DE 19523490
(43) Veröffentlichungstag der Anmeldung: 15.04.1998
(73) Patentinhaber: Krupp Werner & Pfleiderer GmbH, 70469 Stuttgart (DE)
(72) Erfinder: SCHEURING, Bernhard, D-71563 Affalterbach (DE)
(74) Vertreter: Hübner, Gerd, Dipl.-Phys.
(86) Internationale Anmeldenummer: EP9602699
(87) Internationale Veröffentlichungsnummer: WO9701424

(56) Entgegenhaltungen:
- DE-A- 3 824 181
- DE-A- 3 835 574
- US-A- 5 393 536

## Beschreibung

Die Erfindung betrifft eine Vorrichtung zur Imprägnierung von Fasersträngen mit Kunststoffmaterial als Matrixwerkstoff, insbesondere von Glas-, Kohlenstoff-, Aramid-, Flachs- oder Polymerfasern mit einem Schmelz- bzw. Zersetzungspunkt oberhalb des zur Imprägnierung eingesetzten polymeren Matrixwerkstoffes, bestehend aus einem zwischen Begrenzungsflächen und in Förderrichtung beidseitig der Begrenzungsflächen in Abständen aufeinanderfolgender Spreitungselemente gebildeten Imprägnierkanal, mit eintrittsseitig angeordneten Zuführkanälen für die Faserstränge und den Matrixwerkstoff und einer Austrittsöffnung für die imprägnierten Faserstränge.

Die Erfindung betrifft weiterhin ein Verfahren zur Herstellung von langfaserverstärkten Kunststoffmassen unter Verwendung dieser Imprägniervorrichtung.

Bei einer derartigen bei einem Extruder zum Einführen eines Faserstranges aus der DE 40 16 784 A1 bekannten Imprägniervorrichtung erfolgen der Strangeintritt sowie der Strangaustritt nach der Imprägnierung ebenflächig mit geringer Anpassungsfähigkeit an die Erfordernisse der Strangbenetzung. Bei einer weiteren aus der DE 38 35 574 A1 bekannten Vorrichtung können kontinuierlich unidirektional faserverstärkte Linearprofile hergestellt werden. Die Extrusionsimprägniervorrichtung besteht hier aus einem ebenen geteilten Gehäuse. Überschüssiges Material und Glasfaserstücke. die aus Faserbruch während der Imprägnierung entstanden sind, müssen über einen Überlauf abgeführt werden. Der Fasergehalt und die Querschnittsgeometrie der Linearprofile werden über die Austrittsdüse eingestellt. Aufgrund der besonderen Merkmale dieser Vorrichtung ist das Einsatzgebiet stark eingeschränkt. Aus der EP 0 300 321 B1 ist bekannt, daß Faserbündel durch eine Kunststoffkammer hindurchgezogen werden. Die Kunststoffkammer wird von einem Extruder mit thermoplastischer Kunststoffschmelze seitlich gespeist. In der Kunststoffkammer sind zum Imprägnieren der Faserbündel mit dem geschmolzenen thermoplastischen Kunststoff und zum Aufbringen einer Spannung auf das Faserbündel Rotationseinrichtungen angebracht die jedoch nur eine beschränkte Anpassung an die Erfordernisse für die Imprägnierung der Faserstränge ermöglichen.

Aus der DE-A-38 24 181 ist ein Verfahren zur Herstellung von thermoplastischem Prepregs bekannt, bei der eine Vielzahl von Fäden über eine Spreizvorrichtung gezogen wird, welche sich in einem Thermoplast-Schmelzbad befindet. Dabei wird die Spreizvorrichtung beheizt.

Um die Gefahr einer Schmelzezersetzung zu vermeiden, wird eine Fadenschicht 3 durch ein an einem Extruder angeschlossenes Extruderwerkzeug 1 geführt. Das Extruderwerkzeug 1 weist eine Fadendüse auf, in die seitlich Schmelzkanäle einmünden. Der Fadenkanal ist als Ringspalt ausgebildet, der von einem Imprägnierkern und einem Imprägniermantel gebildet ist.

Bedingt durch die ebene Anordnung der oben beschriebenen bekannten Konstruktionen ergeben sich weitere gravierende Nachteile. So ist zum Beispiel bei einem in vielen Anwendungsfällen gewünschten zentralen Strangaustritt, bei welchem die vielen einzelnen Faserstränge zu einem einzigen Strang oder einem Strangprofil zusammengefaßt werden müssen, keine zufriedenstellende Faserstrangführung möglich. Ein weiterer Nachteil der bekannten Konstruktionen ist die ungleichmäßige Strömung der Schmelze im Imprägnierkopf durch Randeinflüsse bzw. unsymmetrisches Durchlaufen der Faserstränge. Desweiteren steht eine relativ aufwendige Fertigungstechnik und die eingeschränkten Einsatzmöglichkeiten einer breiten Anwendung entgegen. Nicht zuletzt ist bei der oft geforderten großen Anzahl an einzelnen Fasersträngen eine kompakte Bauweise nicht mehr möglich.

Der Erfindung liegt die Aufgabe zugrunde eine Vorrichtung zur Imprägnierung von Fasersträngen zu schaffen, die eine optimale Führung und Benetzung von Faserstrangen ermöglicht. Ein Verfahren zu dessen Handhabung dient der Verbesserung der Qualität langfaserverstärkter Kunststoffmassen.

Diese Aufgabe wird durch die im Kennzeichnungsteil des Anspruches 1 angegebenen Merkmale gelöst. Wie bekannt, schließen die Begrenzungsflächen den Imprägnierkanal längs einer gemeinsamen Symmetrieachse unter Ausbildung eines Ringspaltes konzentrisch umschließen, wobei die innere Begrenzungsfläche durch einen Imprägnierkern und die äußere Begrenzungsfläche durch einen Imprägniermantel gebildet sind und der Imprägniermantel den Imprägnierkern vollständig umhüllt. Die Vorrichtung besteht somit im wesentlichen aus einem Imprägniermantel und einem Imprägnierkern mit einer gemeinsamen Symmetrieachse und ermöglicht eine in Fließrichtung des Kunststoffmaterials vollständige symmetrische Anordnung der Faserstränge. Zwischen dem Imprägniermantel und dem Imprägnierkern ergibt sich ein sich axial ausdehnender Ringspalt. Dadurch sind vielfältige Einsatzmöglichkeiten der Vorrichtung zur Herstellung von Kunststoff-Formkörpern oder Profilen ermöglicht. Weitere Vorteile bzw. besondere Wirkungen ergeben sich durch die sehr gleichmäßige Strömung des Kunststoffmaterials über dem Umfang des Imprägnierkanals und einer Veränderung der Relativgeschwindigkeit zwischen Faserstrang und Kunststoffmaterial aufgrund einer Verjüngung des Imprägnierkanalquerschnitts in Förderrichtung. In weiterer Ausbildung der Erfindung ermöglicht der aus Einzelmodulen zusammengesetzte Imprägnierkopf eine Längenanpassung der Fasenführung. Zur Optimierung der Kunststoffschmelzeviskosität sind Imprägnierkern und Imprägniermantel mit einer Heizeinrichtung versehen, so daß der gesamte Imprägnierkopf gleichmäßig auf die geforderte Temperatur temperiert werden kann. Die gemäß Kennzeichen des Anspruches 1 vorgesehenen Stufen des Ringspaltes und die hier vorzugsweise angeordneten Spreizringe bewirken ein Öffnen des Faserstranges im Imprägnierkanal. Die Spreizringe können entweder direkt in den Imprägniermantel und in den Imprägnierkern eingearbeitet sein, oder als austauschbare Formkörper eingesetzt werden. Da die Spreizringe mit dem Faserstrang in direktem Kontakt stehen, müssen diese aus einem besonders verschleißgeschütztem Material hergestellt werden.

Die axiale Lage des Imprägnierkerns läßt sich relativ zum Imprägniermantel in seiner Position einstellen. Dies kann z.B. mittels unterschiedlich hoher Distanzringe zwischen dem Imprägniermantel und dem Flansch des Imprägnierkerns bewerkstelligt werden. Durch eine axiale Veränderung der relativen Position wird der Umschlingungswinkel bzw. die Umlenkung der Faserstränge um die Spreizringe verändert. Hiermit kann der Aufspreizgrad und die Abzugskraft der Faserstränge eingestellt werden. Im Betriebszustand wird der Imprägnierkern am Imprägniermantel mittels eines Schnellverschlußes oder mittels Schrauben gehalten und abgedichtet.

Am Ende des Imprägnierkerns ist ein austauschbarer Formkörper eingebaut. Mit diesem ist die Spaltweite am Ende des Imprägnierkopfes und damit der Druck im Imprägnierkanal einstellbar. Für den Fall, daß einzelne Faserstränge getrennt voneinander ausgetragen werden sollen, kann ein entsprechend ausgestaltetes Formstück als Kalibrierdüse eingesetzt werden.

Zum Einführen der Faserstränge in den Imprägnierkopf besitzt der Imprägnierkern an der eintrittsseitigen Stirnfläche am Umfang verteilte Einführöffnungen. Diese Einführöffnungen können entweder direkt in die Stirnseite des Imprägnierkerns eingearbeitet oder aber auch als einzelne Einführtüllen in die Stirnseite eingesetzt werden. Da diese Zone ganz besonders dem Verschleiß ausgesetzt ist muß dieser Bereich aus entsprechend verschleißbeständigem Material gefertigt werden. Bei entsprechender Lange und relativ geringer Spaltweite der Einführöffnung wird durch die Schleppströmung der einlaufenden Faserstränge verhindert, daß Schmelze aus dem Imprägnierkopf austreten kann. Um ein Aufspleisen der Faserstränge während des Einzugs in den Imprägnierkopf zu verhindern, besitzen die Einführöffnungen einen konischen Einlauf.

In einer besonderen Ausgestaltung können die Einführtüllen auch seitlich geschlitzt sein. In Verbindung mit radial nach außen führenden Schlitzen im Bereich des Flansches des Imprägnierkerns können noch nicht eingefädelte Stränge an einen bereits eingezogenen Strang angeknüpft werden und noch während des laufenden Prozesses in die jeweilige dafür vorgesehene Einführtülle umsortiert werden. Hierzu muß der Imprägnierkern geringfügig axial angehoben werden. Die vorhandenen Schlitze können im normalen Betriebszustand mit einem Füllstück verschlossen werden.

Das Matrixmaterial zum Imprägnieren der Faserstränge wird vorteilhafterweise von der Seite durch den Imprägniermantel in den Ringspalt des Imprägnierkanals eingeführt. Dadurch kann der Imprägnierkern ungehindert aus dem Imprägniermantel gehoben oder in diesen eingefahren werden. Bei thermoplastischem Matrixmaterial erfolgt die Einspeisung in den Imprägnierkanal in der Regel mittels eines Extruders. Duroplastsche Matrixmaterialien können beispielsweise auch durch eine Pumpe in den Imprägnierkopf gefördert werden. Abhängig von den Erfordernissen bzw. der Anwendung des Imprägnierkopfes kann das Matrixmaterial entweder direkt über eine Bohrung, oder zur gleichmäßigen Verteilung des Matrixmaterials über dem Umfang des Imprägnierkanals ähnlich wie bei der Coextrusion über modifizierte Wendelverteiler oder Pinolenwerkzeuge in den Ringspalt eingebracht werden. Eine ringspaltförmige Einführung der Schmelze direkt an einem Spreizring kann ebenfalls von Vorteil bezüglich der Imprägniergüte sein.

Die Anwendung des oben beschriebenen Imprägnierkopfes wird nun im folgenden beschrieben.

Allen Anwendungen gemeinsam ist, daß die Faserstränge vor der Weiterverarbeitung durch den erfindungsgemäßen Imprägnierkopf gezogen, und dort mit Matrixmaterial imprägniert werden. Dabei werden in der Regel mehrere Faserstränge, die von einer Spule oder Trommel abgezogen werden, über eine Vorwärmstrecke geleitet und in Einführtüllen, welche im Imprägnierkern eingesetzt sind, eingefädelt. Die Einführtüllen übernehmen neben der Lagefixierung der Faserstränge eine Abdichtfunktion und gewähren durch eine konische Einlaufkontur ein schonendes Einführen der Faserstränge. Der Imprägnierkern wird zum einfachen Einfädeln und Durchziehen der Faserstränge durch den Imprägnierkopf aus dem Imprägniermantel herausgezogen. Die eingefädelten Faserstränge können dann gebündelt oder einzeln durch den offenen Imprägniermantel von der Eintrittsseite zur Austrittsseite durchgeleitet werden. Anschließend wird der Imprägnierkern wieder in den Imprägniermantel eingeführt. Durch das Einführen des Imprägnierkerns in den Imprägniermantel werden die Faserstränge von den Spreizringen des Imprägnierkerns gegen die Spreizringe des Imprägniermantels gedrückt. Hierdurch werden die unter einer Vorspannung eingeleiteten Faserstränge aufgespreitet. Die relative axiale Lage korrespondierender Spreizringe zueinander wird durch einen entsprechend dimensionierten Distanzring zwischen Imprägniermantel und Imprägnierkern so eingestellt daß die Faserstränge um das gewünschte Maß von der geradlinigen Bahn ausgelenkt werden. Die Benetzung der Faserstränge kann zusätzlich durch die verwendete Anzahl korrespondierender Spreizringe und deren Außenkontur beeinflußt werden Nachdem der Imprägnierkern durch entsprechende Befestigungsmittel am Imprägniermantel fixiert wurde, kann nach Zugabe des Matrixmaterials der Imprägnierkopf in Betrieb genommen werden. Durch eine geeignete Dimensionierung des Imprägnierkanalringspaltes kann das Volumen des Matrixmaterials klein gehalten werden. Die erforderliche Menge an Matrixmaterial wird über eine Durchsatzregelung des Speiseextruders oder einer Speisepumpe geregelt. Der Druck im Imprägnierkopf kann unabhängig vom Durchsatz durch entsprechende Wahl eines am Ende des Imprägnierkerns befindlichen austauschbaren Drosselelementes eingestellt werden. Der Abzug der Faserstränge aus dem Imprägnierkopf ist abhängig vom Anwendungsverfahren und wird an verschiedenen Beispielen im folgenden beschrieben.

### Beispiel 1

Zur Herstellung von langfaserverstärkten Kunststoffmassen, ist der Imprägnierkopf mit einem Ein- oder Zweiwellenextruder verknüpft, wobei die im Imprägnierkopf vorimprägnierten Faserstränge direkt von den Extruderschnecken oder durch Hilfsmittel in den Extruder eingetragen werden. In der Regel wird der Imprägnierkopf zwischen der Aufschmelzzone und der Einmischzone des Extruders angeflanscht. Der Extruder hat zu diesem Zweck eine entsprechende Öfnung im Gehäuse. Dadurch, daß die Faserstränge bereits vor dem Einzug in die Schneckenmaschine mit der viskosen Kunststoffmatrix imprägniert sind, können gegenüber einer konventionellen Betriebsweise die Faserstränge sehr schonend in die Kunststoffmatrix eingemischt werden. Dies führt im Endprodukt zu einer deutlich größeren resultierenden Faserlänge. Die im Extruder aufbereitete langfaserverstärkte Kunststoffmasse kann entweder direkt zu einem Endprodukt, oder zu einem langfaserverstärkten Zwischenprodukt ausgeformt werden. Mögliche Verfahren sind beispielsweise das Verfahren der Direktextrusion von langfaserverstärkten Profilen, die direkte Verarbeitung langfaserverstärkter Kunststoffmassen im Preßverfahren, oder beispielsweise die direkte Beschickung einer Blasformanlage mit faserverstärkten Kunststoffmassen. Bei den langfaserverstärkten Zwischenprodukten kann es sich beispielsweise um Granulate oder Platten bzw. Bänder handeln, die in einem weiteren Verarbeitungsprozeß zu einem Endprodukt verarbeitet werden. Ein ganz wesentlicher Vorteil hierbei ist die Tatsache, daß während der Imprägnierung entstehender Faserabrieb und Bruch einzelner Filamente ohne Verstopfung des Imprägnierkopfes direkt durch die relativ große Einzugsöffnung in den Extruder gespült wird, so daß der kontinuierliche Imprägnierprozeß nicht gestört wird. Durch den modularen Aufbau des Imprägnierkopfes, kann beispielsweise durch einen Austausch von Spreizringen durch welche mit etwas modifizierter Kontur und Austausch des Distanzringes der eingesetzten Kunststoffmatrix Rechnung getragen werden.

### Beispiel 2

Zur Herstellung unidirektional faserverstärkter Profile werden die Faserstränge kontinuierlich durch den Imprägnierkopf gezogen und in einer Düse am Austritt aus dem Imprägnierkopf in die entsprechende Form gebracht. Dieses Verfahren wird im allgemeinen als Pultrusionsverfahren bezeichnet. Eine Variante des Imprägnierkopfes ermöglicht zusätzliche coextrudierte Kern- und Mantelschichten aus einem unverstärkten oder faserverstärkten Kunststoff aufzutragen. Die hierfür notwendigen Coextrusionswerkzeuge sind dabei direkt in den Imprägnierkopf integriert. Desweiteren ist es möglich an Stelle der Kernschicht durch das Zentrum des Imprägnierkerns einen von den Fasersträngen zu umhüllenden Zusatzwerkstoff mit durchzuziehen. Auf diese Weise sind sogenannte Sandwichprofile herstellbar.

### Beispiel 3

Im Bereich der langfaserverstärkten Thermoplaste ist die Herstellung von Granulat aus faserverstärktem thermoplastischem Material am bekanntesten, wobei eine Vielzahl von Einzelfilamenten der Verstärkungsfaser in einer Matrix des thermoplastischen Materials parallel angeordnet sind und die Faserlänge gleich groß wie die Granulatlänge ist. Die Imprägnierung der Verstärkungsfasern mit dem thermoplastischen Material kann hierbei ebenfalls mit dem erfindungsgemäßen Imprägnierkopf erfolgen. Am Ende des Imprägnierkerns ist hierfür ein entsprechend ausgestaltetes Formstück als Kalibrierdüse eingesetzt. Die einzelnen, mit Schmelze benetzten Faserstränge werden nach dem Durchlaufen einer Abkühlstrecke von einer Abzugseinheit kontinuierlich abgezogen und einer Granulierung zugeführt.

### Beispiel 4

Hierbei werden die mit der Kunststoffmatrix benetzten Verstärkungsfasern auf einem rotierenden Wickeldorn direkt abgelegt. Der rotierende Wickeldorn zieht dabei die Faserstränge durch den erfindungsgemäßen Imprägnierkopf. Über die Drehzahl des Wickeldorns kann die Durchlaufgeschwindigkeit der Faserstränge geregelt werden. Bei der Kunststoffmatrix kann es sich sowohl um duroplastisches, als auch thermoplastisches Kunststoffmaterial handeln.

Im Folgenden wird die Erfindung anhand einiger in der Zeichnung in schematischer Weise dargestellter Ausführungsbeispiele näher erläutert. Es zeigen
- Fig. 1: einen Längsschnitt des Imprägnierkopfes, wobei dieser an ein Extrudergehäuse angeflanscht ist.
- Fig. 2: eine Draufsicht auf den Imprägnierkopf, in leicht modifizierter Form,
- Fig. 3: einen Längs- und Querschnitt des Imprägnierkopfes mit eingebauter Kalibrierdüse,
- Fig. 4: einen Schnitt des Imprägnierkopfes mit integriertem Coextrusionswerkzeug,
- Fig. 5: eine Extrusionsanlage zur Herstellung von langfaserverstärkten Profilen mit integriertem Imprägnierkopf,
- Fig. 6: eine Pultrusionsanlage zur Herstellung von Profilen mit integriertem Coextrusions-Imprägnierkopf.
- Fig. 7: eine Pultrusionsanlage zur Herstellung von Sandwichprofilen mit integriertem Imprägnierkopf.

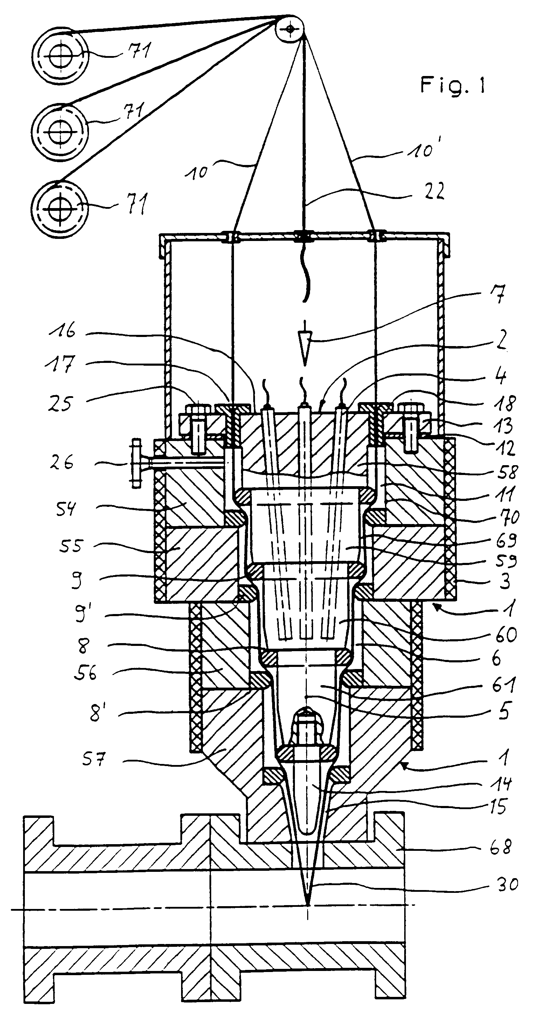

Fig. 1 zeigt den Imprägnierkopf der im wesentlichen aus dem Imprägniermantel 1 und dem Imprägnierkern 2 besteht und an ein Extrudergehäuse 68 angeflanscht ist. Der Impragniermantel 1 und der Imprägnierkern 2 ist mit einer Heizeinrichtung versehen. Der Imprägniermantel 1 wird von einer elektrischer Heizschale 3 und der Imprägnierkern 2 von elektrischen Heizpatronen 4 beheizt. Der Imprägniermantel 1 und der Imprägnierkern 2 haben eine gemeinsame Symmetrieachse 5, wobei der Impragniermantel 1 den Imprägnierkern 2 vollständig umhüllt. Die Außenabmessungen eines Ringspaltes 6 zwischen Imprägniermantel 1 und Imprägnierkern 2 verjüngen sich in Flußrichtung 7 stufenförmig. An allen Stufen 8, 8' des Imprägnierkerns 2 und des Imprägniermantels 1 befinden sich entsprechend ausgebildete Spreizringe 9, 9'. Diese bewirken ein Öffnen des Faserstranges 10, 10' im Imprägnierkanal 11.

Die Spreizringe 9, 9' können entweder direkt in den Imprägniermantel 1 und in den Imprägnierkern 2 eingearbeitet sein, oder als austauschbare Formkörper eingesetzt werden. Da die Spreizringe 9, 9' mit dem Faserstrang 10, 10' in direktem Kontakt stehen, müssen diese aus einem besonders verschleißgeschütztem Material hergestellt werden.

Der Imprägniermantel 1 und der Imprägnierkern 2 kann wiederum aus mehreren Einzelteilen 54, 55, 56, 57 bzw. 58, 59, 60, 61 modulartig zusammengesetzt sein. Dies ermöglicht zum einen einen totraumfreien Einbau der Spreizringe 9, 9' und ermöglicht zum anderen eine stufenweise Anpassung an die gewünschte Baugröße bzw. Anzahl an geforderten Fasersträngen.

Die axiale Lage des Imprägnierkerns 2 läßt sich relativ zum Imprägniermantel 1 in seiner Position einstellen. Dies kann mittels unterschiedlich hoher Distanzringe 12 zwischen dem Imprägniermantel 1 und dem Flansch 13 des Imprägnierkerns 2 bewerkstelligt werden. Bei einer relativen axialen Verschiebung von Imprägnierkern 2 und Imprägniermantel 1 wird der Umschlingungswinkel bzw. die Umlenkung der Faserstränge 10, 10' um die Spreizringe 9, 9' verändert. Hierdurch kann der Aufspreizgrad und die Abzugskraft der Faserstränge 10, 10' eingestellt werden.

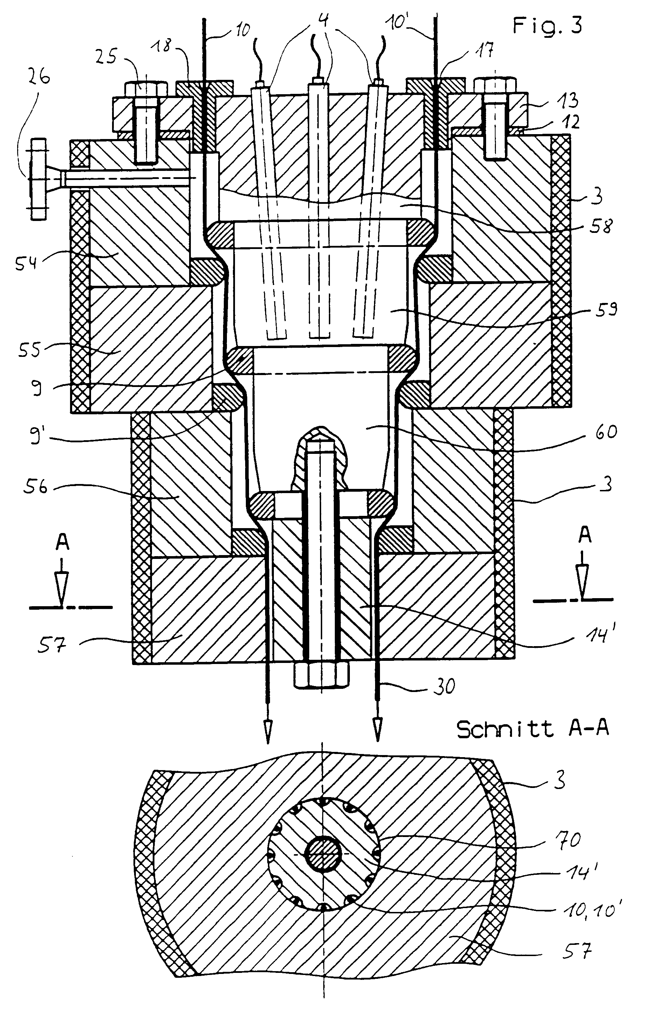

Am Ende des Imprägnierkerns 2 ist ein austauschbarer Formkörper 14 eingebaut. Mit diesem ist die Spaltweite 15 zwischen Imprägnierkern 2 und Imprägniermantel 1 am Ende des Imprägnierkopfes und damit der Druck im Imprägnierkanal einstellbar. Für den Fall, daß die Vielzahl an Fasersträngen 10, 10' nicht gebündelt, sondern einzeln voneinander ausgetragen werden sollen, kann ein entsprechend ausgestaltetes Formstück 14 gemäß Fig. 3 als Kalibrierdüse 14' eingesetzt werden.

Die zur Verstärkung eingesetzten Faserstränge werden von Spulen 71 abgezogen. Zum Einführen der Faserstränge 10, 10' in den Imprägnierkopf besitzt der Imprägnierkern 2 an der eintrittsseitigen Stirnfläche 16 am Umfang verteilte Einführöffnungen 17. Die Einführöffnungen 17 können entweder direkt in die Stirnseite 16 des Imprägnierkerns 2 eingearbeitet, oder aber auch als einzelne Einführtüllen 18 in die Stirnseite 16 des Imprägnierkerns 2 eingesetzt werden. Da die Einführöffnung 17 besonders dem Verschleiß ausgesetzt ist, muß diese aus entsprechend verschleißbeständigem Material gefertigt werden. Bei ausreichend dimensionierter Länge und relativ geringer Spaltweite der Einführöffnung wird durch die Schleppströmung des einlaufenden Faserstranges 10, 10' verhindert, daß Schmelze eintrittsseitig aus dem Imprägnierkopf austreten kann. Um ein Aufspleisen der Faserstränge 10, 10' während des Einzugs in den Imprägnierkopf zu verhindern, besitzen die Einführöffnungen 17 auf der Eintrittsseite eine konische Einlaufschräge.

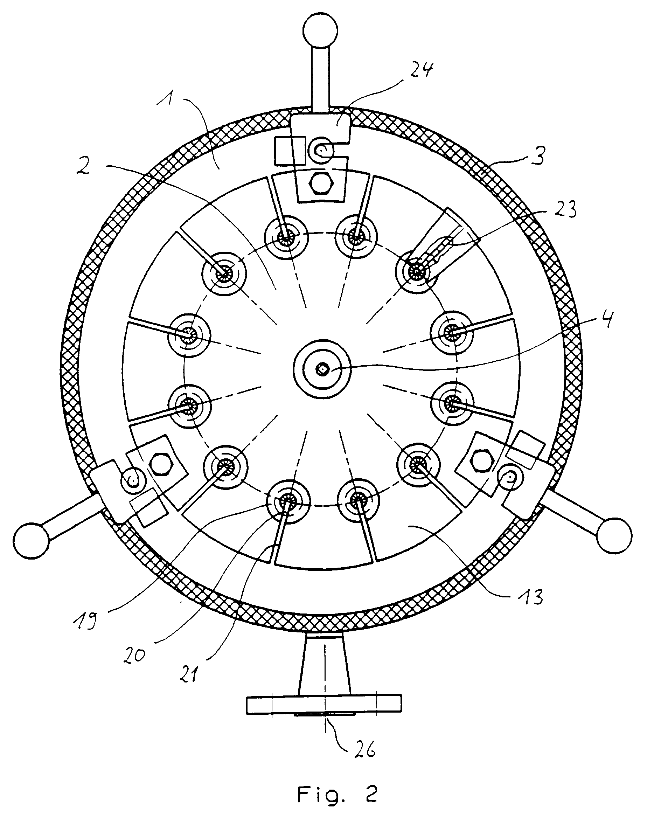

Fig. 2 zeigt in einer besonderen Ausgestaltung Einführtüllen 19 mit einem radial nach außen verlaufenden Schlitz 20. In Verbindung mit den radial nach außen führenden Schlitzen 21 im Bereich des Flansches 13 des Imprägnierkerns 2 können noch nicht eingefädelte Faserstränge 22 (siehe Fig. 1) an einen bereits eingezogenen Faserstrang 10, 10' angeknüpft werden und noch während des laufenden Prozesses in die jeweilige dafür vorgesehene Einführtülle umsortiert werden. Hierzu muß der Imprägnierkern 2 geringfügig axial angehoben werden. Die vorhandenen Schlitze 20, 21 können im normalen Betriebszustand mit einem Füllstück 23 verschlossen werden.

Die Fixierung des Imprägnierkerns 2 am Imprägniermantel 1 kann wie in Fig. 2 dargestellt mittels eines Schnellverschlusses 24 (z.B. Bajonettverschluß) oder wie in Fig. 1 mittels Schrauben 25 erfolgen.

Die eintrittsseitige Abdichtung zwischen Imprägniermantel 1 und Imprägnierkern 2 erfolgt an den Stirnflächen des Distanzringes 12.

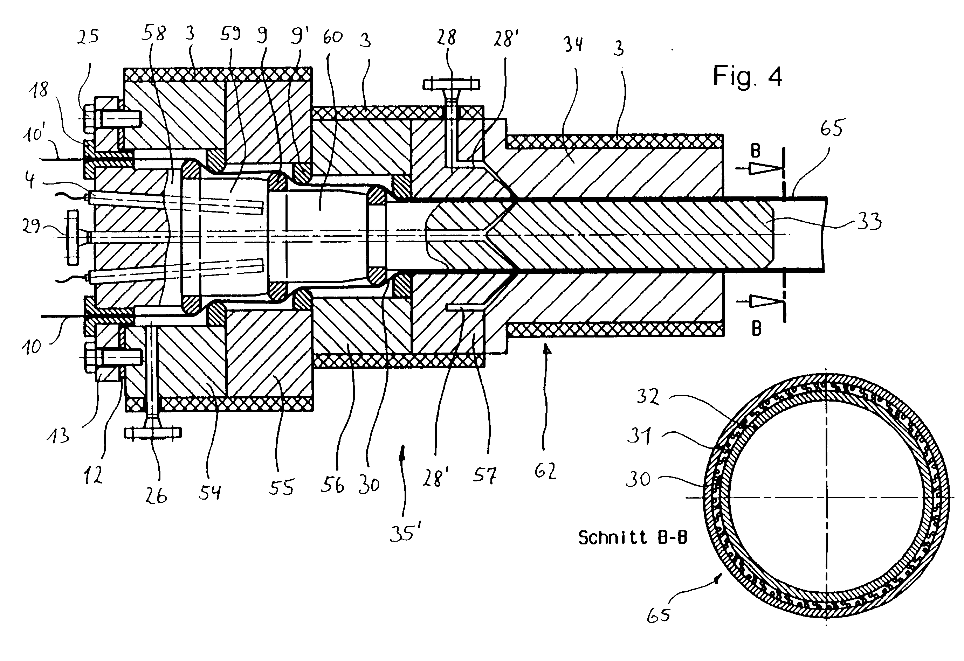

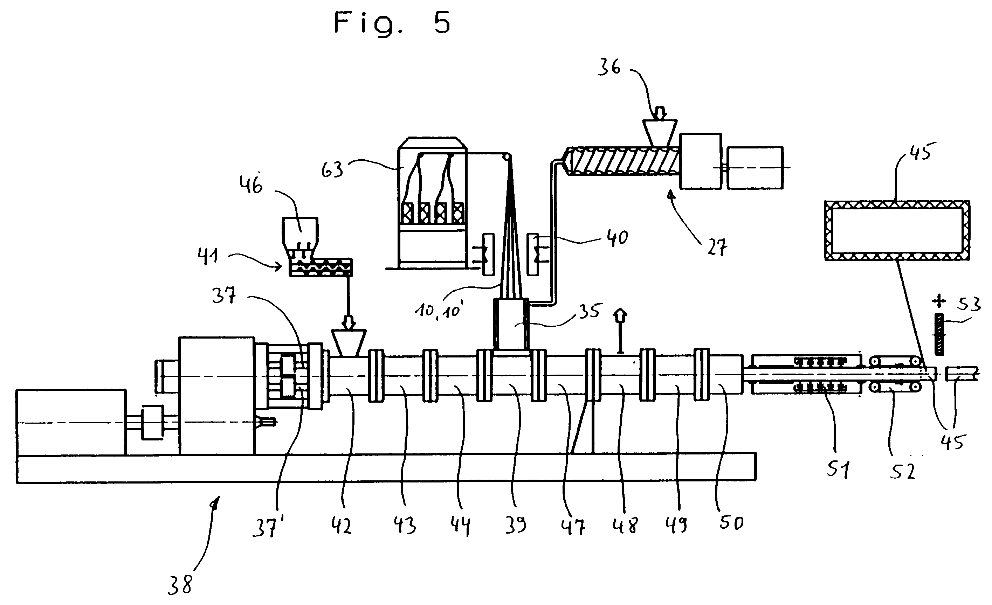

Das Matrixmaterial zum Imprägnieren der Faserstränge 10, 10' wird vorteilhafterweise seitlich über den Zuführkanal 26 durch den Imprägniermantel 1 in den Imprägnierkanal 11 zugegeben. Bei thermoplastischem Matrixmaterial erfolgt dies in der Regel wie in Fig. 5 dargestellt mittels eines Speiseextruders 27. Duroplastsche Matrixmaterialien können beispielsweise auch durch eine hier nicht dargestellte Pumpe in den Imprägnierkopf gefördert werden. Abhängig von den Erfordernissen bzw. der Anwendung des Imprägnierkopfes kann das Kunststoffmatrixmaterial entweder direkt über den Zuführkanal 26, oder um eine gleichmäßigere Verteilung des Kunststoffmatrixmaterials über dem Umfang des Imprägnierkanals 11 zu gewährleisten, über ein Masseverteilsystem ähnlich der Coextrusion in den Imprägnierkanal 11 eingebracht werden. Als Masseverteilsysteme sind z.B. modifizierte Wendelverteiler oder Pinolen möglich. Fig. 4 zeigt am Beispiel der Variante eines Imprägnierkopfes mit Coextrusionswerkzeug 62 ein entsprechendes Masseverteilsystem 28'. Die Zuführung der Schmelze in den Imprägnierkanal 11 direkt an einem Spreizring 9' kann bezüglich der Imprägniergüte von Vorteil sein. Eine Zugabe des Kunststoffmaterials direkt unterhalb der Einführtülle 18 bzw 19 sorgt für eine Zwangsspülung des gesamten Imprägnierkanals 11. Der in Fig. 4 dargestellte Imprägnierkopf erlaubt die Aufbringung zusätzlicher Kunststoffschichten auf die bereits imprägnierten Faserstränge 30 im Bereich des Austrags. Die Mantelschicht 31 um die imprägnierten Faserstränge 30 wird über den Zuführkanal 28 und das Masseverteilsystem 28' aufgetragen. Die Kernschicht 32 um die imprägnierten Faserstränge 30 gelangt über den Zuführkanal 29 in den Austragsbereich des Imprägnierkopfes. Der Verdrängerkörper 33 bildet die Innenkontur des pultrudierten Profils ab. Die äußere Kontur wird durch die Düse 34 gebildet.

In Fig. 5 ist eine Anlage zur Herstellung langfaserverstärkter Profile dargestellt, wobei mittels des Imprägnierkopfes 35 mit einer Kunststoffmatrix 36 vorimprägnierte Faserstränge 10, 10' direkt von den Schnecken 37, 37' des Compoundierextruders 38 im Gehäuse 39 eingezogen werden. Die Faserstränge 10, 10' werden dabei von einem Spulenständer 63 abgezogen. Vor dem Einzug der Faserstränge 10, 10' in den Imprägnierkopf 35 werden diese mittels einer Heizung 40 vorgeheizt. Die Aufschmelzung und Dosierung des Kunststoffmatrixmaterials für den Imprägnierkopf 35 erfolgt durch den Speiseextruder 27. Der polymere Grundwerkstoff 46 für das zu extrudierende Profil 45 wird über die Dosierung 41 in das Einlaufgehäuse 42 in den Compoundierextruder 38 zugegeben und in Gehäuse 43 und 44 in den viskosen Zustand überführt. In Gehäuse 39 werden dann die mit dem Kunststoffmatrixwerkstoff 36 vorimprägnierten Faserstränge 10, 10', die von den Schnecken 37, 37' des Compoundierextruders 38 eingezogen werden, mit dem polymeren Grundwerkstoff 46 zusammengeführt. Bei Verwendung unterschiedlicher polymerer Matrixwerkstoffe 36 und 46 kann sowohl der Forderung nach möglichst niedriger Viskosität für die Imprägnierung der Faserstränge 10, 10', als auch der Forderung nach ausreichender Schmelzestabilität für die Extrusion des Profils 45 Rechnung getragen werden. Die Zerteilung der Faserstränge 10, 10' und die homogene Verteilung im polymeren Matrixwerkstoff erfolgt in Gehäuse 47, wobei hierfür spezielle distributiv wirkende, nicht näher dargestellte. Schneckenelemente eingesetzt werden. Durch den Einzug von bereits vorimprägnierten Faserstrangen 10. 10' kann im Gegensatz zur konventionellen Einmischung von Fasersträngen sehr schonend eingemischt werden. In Gehäuse 48 kann dann das mit langen Fasern verstärkte Produkt entgast und über das Gehäuse 49 und das Profilwerkzeug 50 ausgetragen werden. Nach der Kalibrierung und Abkühlung des extrudierten Profils 45 durch eine Sprühkühlung 51 wird das Profil von der Abzugseinheit 52 abgezogen und nach Bedarf von einer Säge 53 auf die gewünschte Länge gebracht. Die wesentlichen Vorteile hierbei sind gegeben durch die Produktion aus der ersten Wärme heraus, der Möglichkeit des Einsatzes von billigeren Rohpolymeren und die Extrusion von Profilen mit langfaserigen Verstärkungseinlagen bei optimaler Einmischung und Benetzung der einzelnen Filamente der Fasereinlagen durch den Einsatz des erfindungsgemäßen Imprägnierkopfes. Dies führt zu Produkten mit optimalen mechanischen Eigenschaften und guter Oberflächengüte.

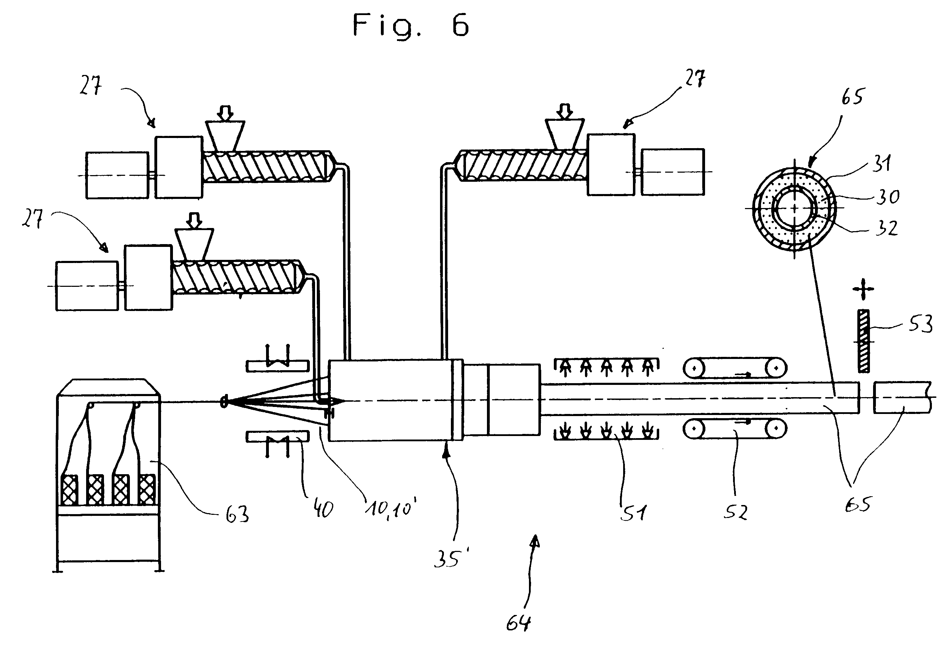

In Fig. 6 wird eine Pultrusionsanlage 64 zur Herstelung von endlosfaserverstärkten Profilen unter Verwendung des erfindungsgemäßen Imprägnierkopfes 35', wie er in Fig. 4 prinzipiell dargestellt ist, gezeigt. Hierbei werden mittels des Imprägnierkopfes 35' austrittsseitig um die imprägnierten Faserstränge 30 zusätzlich eine Mantelschicht 31 und eine Kernschicht 32 extrudiert. Dadurch ist es möglich, ein unidirektional verstärktes Pultrusionsprofil 65 mit hervorragender Oberflächenqualität herzustellen.

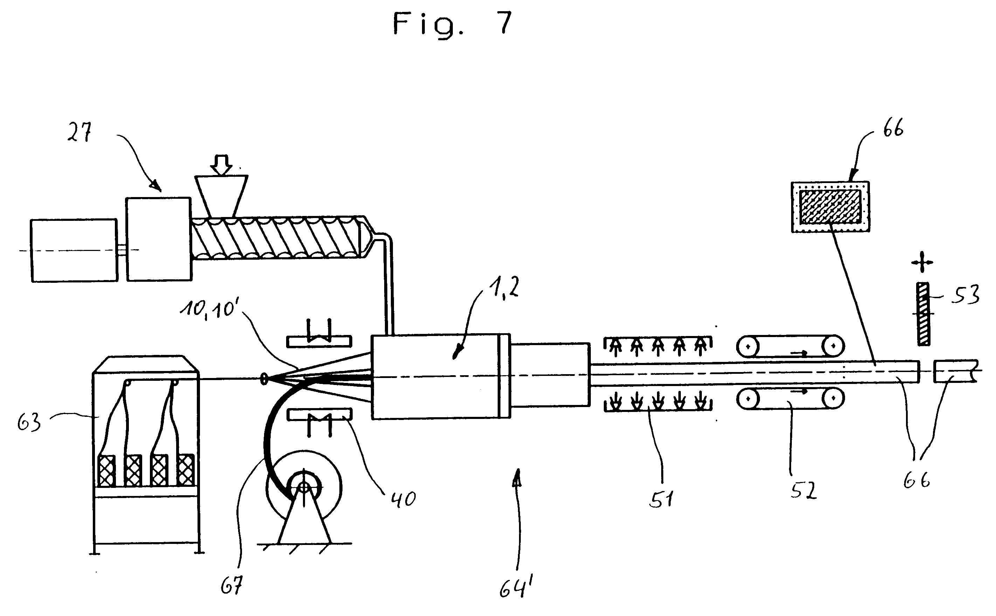

Fig. 7 zeigt eine Pultrusionsanlage 64' zur Herstellung von endlosfaserverstärkten Sandwichprofilen 66 unter Verwendung des erfindungsgemäßen Imprägnierkopfes, der im wesentlichen aus dem Imprägniermantel 1 und dem Imprägnierkern 2 besteht. Hierbei wird durch den Imprägnierkopf hindurch ein Kernprofil 67 mit durchgezogen und von den imprägnierten Fasersträngen 30 umhüllt

## Patentansprüche

1. Vorrichtung zur Imprägnierung von Fasersträngen mit Kunststoffmaterial als Matrixwerkstoff, insbesondere von Glas-, Kohlenstoff-, Aramid-, Flachs-, oder Polymerfasern mit einem Schmelz- bzw. Zersetzungspunkt oberhalb des zur Imprägnierung eingesetzten polymeren Matrixwerkstoffes, mit eintrittsseitig angeordneten Zuführkanälen (17, 26) für die Faserstränge (10, 10') und den Matrixwerkstoff, bestehend aus einem zwischen Begrenzungsflächen gebildeten Imprägnierkanal (11), wobei die Begrenzungsflächen den Imprägnierkanal (11) längs einer gemeinsamen Symmetrieachse (5) unter Ausbildung eines Ringspaltes konzentrisch umschließen und die innere Begrenzungsfläche durch einen Imprägnierkern (2) und die äußere Begrenzungsfläche durch einen Imprägniermantel (1) gebildet sind und wobei der Imprägniermantel (1) den Imprägnierkern (2) vollständig umhüllt, **dadurch gekennzeichnet,** daß der Imprägnierkanal (11) mit in Abständen aufeinanderfolgenden Spreizungselementen (9, 9') ausgebildet ist und die Außenabmessungen des zwischen Imprägniermantel (1) und Imprägnierkern (2) gebildeten Ringspaltes (6) sich in Flußrichtung (7) stufenförmig verjüngen.

2. Vorrichtung nach Anspruch 1, dadurch gekennzeichnet, daß der Imprägniermantel (1) und der Imprägnierkern (2) modulartig aus einer beliebigen Anzahl Einzelmodule (54, 55, 56 57 bzw. 58, 59, 60, 61) zusammengesetzt sind.

3. Vorrichtung nach Anspruch 1 oder 2, dadurch gekennzeichnet, daß der Imprägniermantel (1) und der Imprägnierkern (2) mit einer Heizeinrichtung (3, 4) versehen sind.

4. Vorrichtung nach einem der Ansprüche 1 bis 3, dadurch gekennzeichnet, daß jeweils an den Stufen (8, 8') des Imprägniermantels (1) und des Imprägnierkerns (2) sich die in Form von Spreizringen (9, 9') ausgebildeten Spreitungselemente befinden

5. Vorrichtung nach Anspruch 4, dadurch gekennzeichnet, daß die Spreizringe (9, 9') direkt in den Imprägniermantel (1) und in den Imprägnierkern (2) eingearbeitet sind.

6. Vorrichtung nach Anspruch 4, dadurch gekennzeichnet, daß die Spreizringe (9, 9') als austauschbare Formkörper in den Imprägniermantel (1) und den Imprägnierkern (2) eingesetzt sind.

7. Vorrichtung nach Anspruch 6, dadurch gekennzeichnet, daß die austauschbaren Spreizringe (9, 9') aus verschleißbeständiger Keramik hergestellt sind.

8. Vorrichtung nach einem der Ansprüche 1 bis 7, dadurch gekennzeichnet, daß die axiale Lage des Imprägnierkerns (2) relativ zum Imprägniermantel (1) in seiner Position einstellbar ist.

9. Vorrichtung nach Anspruch 8, dadurch gekennzeichnet, daß die axiale Lage durch unterschiedlich hohe Distanzringe (12) zwischen dem Imprägniermantel (1) und dem Flansch (13) des Imprägnierkerns (2) eingestellt wird.

10. Vorrichtung nach einem der Ansprüche 1 bis 9, dadurch gekennzeichnet, daß austrittsseitig am Ende des Imprägnierkerns (2) ein austauschbares Formstück (14) eingebaut ist.

11. Vorrichtung nach Anspruch 10, dadurch gekennzeichnet, daß das Formstück (14) mit der äußeren Begrenzungswand (70) eine Kalibrierdüse (14') bildet.

12. Vorrichtung nach einem der Ansprüche 1 bis 11, dadurch gekennzeichnet daß der Imprägnierkern (2) an der eintrittsseitigen Stirnfläche (16) am Umfang verteilte Einführöffnungen (17) besitzt.

13. Vorrichtung nach Anspruch 12, dadurch gekennzeichnet, daß diese Einführöffnungen (17) direkt in die Stirnseite (16) des Imprägnierkerns (2) eingearbeitet sind.

14. Vorrichtung nach Anspruch 12, dadurch gekennzeichnet daß die Einführöffnungen (17) als einzelne austauschbare Einführtüllen (18, 19) in die Stirnseite eingesetzt sind.

15. Vorrichtung nach Anspruch 14, dadurch gekennzeichnet daß die Einführtüllen (18, 19) aus verschleißbeständiger Keramik gefertigt sind.

16. Vorrichtung nach Anspruch 1, dadurch gekennzeichnet, daß das Matrixmaterial zum Imprägnieren der Faserstränge (10, 10') seitlich durch den Imprägniermantel (1) in den Imprägnierkanal (11) zugegeben wird.

17. Vorrichtung nach Anspruch 1, dadurch gekennzeichnet, daß das Matrixmaterial zur gleichmäßigen Verteilung über dem Umfang des Imprägnierkanals (11) über ein mit dem Imprägnierkanal (11) verbundenen Masseverteilsystem (28') eingebracht wird.

18. Vorrichtung nach Anspruch 17, dadurch gekennzeichnet, daß das Matrixmaterial direkt durch einen der Spreizringe (9') ringspaltförmig zugegeben wird.

19. Vorrichtung nach Anspruch 1, dadurch gekennzeichnet, daß für die Coextrusion einer Kernschicht (32) ein Zuführkanal (29) in den Imprägnierkern (2) eingebracht wird, wobei der Zuführkanal (29) das Matrixmaterial um den Verdrängerkörper (33) gleichmäßig verteilt.

20. Vorrichtung nach Anspruch 1, dadurch gekennzeichnet, daß an der Austrittsseite des Imprägnierkopfes zur Coextrusion einer Mantelschicht (31) ein Zuführkanal (28), der in ein Masseverteilsystem (28') übergeht, eingebracht ist.

21. Verfahren zur Herstellung von langfaserverstärkten Kunststoffmassen unter Verwendung der Imprägniervorrichtung nach einem der vorhergehenen Ansprüche, wobei der Imprägnierkopf (35) mit einem Ein- oder Zweiwellenextruder (38) verknüpft ist und wobei die im Imprägnierkopf (35) vorimprägnierten Faserstränge (10, 10') in den Extruder (38) eingetragen und in die viskose Kunststoffmasse eingemischt werden.

22. Verfahren nach Anspruch 21, dadurch gekennzeichnet, daß zusätzliche coextrudierte Kern- und Mantelschichten (32, 31) aus einem unverstärkten oder faserverstärkten Kunststoff unter Verwendung der Imprägniervorrichtung nach einem der vorhergehenden Ansprüche aufgebracht werden

23. Verfahren nach Anspruch 22, dadurch gekennzeichnet, daß durch das Zentrum des Imprägnierkerns (2) ein von den Fasersträngen (10, 10') zu umhüllender Zusatzstoff (67) mit durchgezogen wird.

24. Verfahren nach Anspruch 23, dadurch gekennzeichnet, daß der zu umhüllende Zusatzstoff (67) ein Schaumkern ist.

25. Verfahren nach Anspruchs 21, dadurch gekennzeichnet, daß aus der Kunststoffmasse hergestellte, mit Fasern verstärkte Profile in einem nachfolgenden Schritt zu Granulaten geschnitten werden, wobei eine Vielzahl von Einzelfilamenten der Verstärkungsfaser in einer Matrix des thermoplastischen Materials parallel angeordnet ist und die Faserlänge gleich der Granulatlänge ist.

## Claims

1. Apparatus for impregnating fibrous strands with plastic material as a matrix material, in particular of glass, carbon, aramid, flax or polymer fibers having a melting or decomposition point above that of the polymeric matrix material used for impregnating, having feeding channels (17, 26) for the fibrous strands (10, 10') and the matrix material that are arranged on the intake side, comprising an impregnating channel (11) formed between limiting surfaces, the limiting surfaces enclosing the impregnating channel (11) concentrically along a common symmetry axis (5) to form a ring-shaped gap, and the inside limiting surface being formed by an impregnating core (2) and the outside limiting surface by an impregnating shell (1), and the impregnating shell (1) completely enveloping the impregnating core (2), characterized in that the impregnating channel (11) is formed to have a succession of spaced expanding elements (9, 9'), and in that the outside dimensions of the ring-shaped gap (6) formed between the impregnating shell (1) and the impregnating core (2) taper stepwise in the direction of flow (7).

2. Apparatus according to claim 1, characterized in that the impregnating shell (1) and the impregnating core (2) are composed in a modular design from an optional number of individual modules (54, 55, 56, 57 or 58, 59, 60, 61).

3. Apparatus according to claim 1 or 2 characterized in that the impregnating shell (1) and the impregnating core (2) are provided with a heating device (3, 4).

4. Apparatus according to one of claims 1 to 3, characterized in that the spreader elements in the form of spreader rings (9, 9') are located at the respective stages (8, 8') of the impregnating shell (1) and the impregnating core (2).

5. Apparatus according to claim 4, characterized in that the spreader rings (9, 9') are incorporated directly into the impregnating shell (1) and the impregnating core (2).

6. Apparatus according to claim 4, characterized in that the spreader rings (9, 9') are inserted as replaceable molded parts in the impregnating shell (1) and the impregnating core (2).

7. Apparatus according to claim 6, characterized in that the replaceable spreader rings (9, 9') are produced from wear-resistant ceramic material.

8. Apparatus according to one of claims 1 to 7, characterized in that the axial position of the impregnating core (2) can be adjusted relative to the position of the impregnating shell (1).

9. Apparatus according to claim 8, characterized in that the axial position can be adjusted through differently high spacer rings (12) between the impregnating shell (1) and the flange (13) of the impregnating core (2).

10. Apparatus according to one of claims 1 to 9, characterized in that a replaceable molded part (14) is installed on the discharge side, at the end of the impregnating core (2).

11. Apparatus according to claim 10, characterized in that the molded part (14) combines with the outer limiting wall (70) to form a calibration nozzle (14').

12. Apparatus according to one of claims 1 to 11, characterized in that the impregnating core (2) has intake openings (17), which are distributed around the circumference of the intake side front (16).

13. Apparatus according to claim 12, characterized in that these intake openings (17) are incorporated directly into the front (16) of the impregnating core (2).

14. Apparatus according to claim 12, characterized in that the intake openings (17) are inserted as individual replaceable feed nozzles (18, 19) into the front.

15. Apparatus according to claim 14, characterized in that the feed nozzles (18, 19) are made of wear-resistant ceramic.

16. Apparatus according to claim 1, characterized in that the matrix material for impregnating the fibrous strands (10, 10') is added laterally through the impregnating shell (1) into the impregnating channel (11).

17. Apparatus according to claim 1, characterized in that for regular distribution across the circumference of the impregnating channel (11), the matrix material is placed via a melt distribution system (28') that is connected to the impregnating channel (11).

18. Apparatus according to claim 17, characterized in that the matrix material is added directly through one of the spreader rings (9'), such that it flows into the ring-shaped gap.

19. Apparatus according to claim 1, characterized in that a feeding channel (29) is incorporated into the impregnating core (2) for the coextrusion of a core layer (32), wherein the feeding channel (29) distributes the matrix material evenly around the displacing body (33).

20. Apparatus according to claim 1, characterized in that a feeding channel (28), which runs into a melt distributing system (28'), is installed at the impregnating head discharge side for the coextrusion of a shell layer (31).

21. Method of manufacturing long-fiber reinforced plastic materials by using the impregnating apparatus according to one of the preceding claims, characterized in that the impregnating head (35) is linked to a single screw or twin screw extruder (38), and in that the fibrous strands (10, 10') pre-impregnated in the impregnating head (35) are fed into the extruder (38) and mixed into the viscous plastic material.

22. Method according to claim 21, characterized in that additional co-extruded core and shell layers (32, 31) of a non-reinforced or fiber-reinforced plastic material are applied by using the impregnating apparatus according to one of the preceding claims.

23. Method according to claim 22, characterized in that an additional material (67) to be enveloped by the fibrous strands (10, 10') is also pulled through the center of the impregnating core (2).

24. Method according to claim 23, characterized in that the additional material (67) to be enveloped is a foam core.

25. Method according to claim 21, characterized in that fiber-reinforced profiles made from the plastic material are cut into granules in a subsequent step, a plurality of individual filaments of the reinforcement fiber being disposed parallel in a matrix for the thermoplastic material and the fiber length equaling the granule length.

## Revendications

1. Dispositif d'imprégnation d'ensembles de fibres avec un matériau constitué par une matière synthétique comme matériau de matrice, en particulier de fibres de verre, de carbone, d'aramide, de lin ou de polymère, ayant un point de fusion ou de décomposition supérieur à celui du matériau de matrice polymère utilisé pour l'imprégnation, avec des canaux d'introduction (17, 26) disposés du côté de l'entrée pour les ensembles de fibres (10, 10') et le matériau de matrice, consistant en un canal d'imprégnation (11) formé entre des surfaces de limitation, où les surfaces de limitation entourent concentriquement le canal d'imprégnation (11) le long d'un axe de symétrie commun (5) en formant une ouverture annulaire et la surface de limitation intérieure est formée par un noyau d'imprégnation (2) et la surface de limitation extérieure est formée par une enveloppe d'imprégnation (1) et où l'enveloppe d'imprégnation (1) entoure totalement le noyau d'imprégnation (2), caractérisé en ce que le canal d'imprégnation (11) est muni d'éléments de déploiement (9, 9') qui se succèdent à distance et les dimensions extérieures de l'ouverture annulaire (6) formée entre l'enveloppe d'imprégnation (1) et le noyau d'imprégnation (2) se rétrécissent en forme de gradins dans la direction d'écoulement (7).

2. Dispositif selon la revendication 1 caractérisé en ce que l'enveloppe d'imprégnation (1) et le noyau d'imprégnation (2) sont constitués de manière modulaire par un nombre quelconque de modules individuels (54, 55, 56, 57 et 58, 59, 60, 61).

3. Dispositif selon la revendication 1 ou 2 caractérisé en ce que l'enveloppe d'imprégnation (1) et le noyau d'imprégnation (2) sont munis d'un dispositif chauffant (3, 4).

4. Dispositif selon l'une des revendications 1 à 3 caractérisé en ce que les éléments de déploiement agencés sous forme d'anneaux élargisseurs (9, 9') se trouvent, dans chaque cas, au niveau des gradins (8, 8') de l'enveloppe d'imprégnation (1) et du noyau d'imprégnation (2).

5. Dispositif selon la revendication 4 caractérisé en ce que les anneaux élargisseurs (9, 9') sont formés directement dans l'enveloppe d'imprégnation (1) et dans le noyau d'imprégnation (2).

6. Dispositif selon la revendication 4 caractérisé en ce que les anneaux élargisseurs (9, 9') sont insérés sous forme de corps mis en forme remplaçables dans l'enveloppe d'imprégnation (1) et dans le noyau d'imprégnation (2).

7. Dispositif selon la revendication 6 caractérisé en ce que les anneaux élargisseurs remplaçables (9, 9') sont fabriqués en céramique résistant à l'usure.

8. Dispositif selon l'une des revendications 1 à 7 caractérisé en ce que la situation axiale du noyau d'imprégnation (2) par rapport à l'enveloppe d'imprégnation (1) est réglable concernant sa position.

9. Dispositif selon la revendication 8 caractérisé en ce que la situation axiale est réglée par des anneaux d'écartement (12) de hauteur différente entre l'enveloppe d'imprégnation (1) et la bride (13) du noyau d'imprégnation (2).

10. Dispositif selon l'une des revendications 1 à 9 caractérisé en ce qu'une pièce mise en forme (14) remplaçable est incorporée du côté de la sortie à l'extrémité du noyau d'imprégnation (2).

11. Dispositif selon la revendication 10 caractérisé en ce que la pièce mise en forme (14) forme avec la paroi de limitation extérieure (70) une buse de calibrage (14').

12. Dispositif selon l'une des revendications 1 à 11 caractérisé en ce que le noyau d'imprégnation (2) possède des ouvertures d'introduction (17) réparties sur la périphérie au niveau de la surface frontale (16) du côté de l'entrée.

13. Dispositif selon la revendication 12 caractérisé en ce que ces ouvertures d'introduction (17) sont pratiquées directement dans le côté frontal (16) du noyau d'imprégnation (2).

14. Dispositif selon la revendication 12 caractérisé en ce que les ouvertures d'introduction (17) sont insérées dans le côté frontal sous forme de douilles d'introduction (18, 19) remplaçables individuelles.

15. Dispositif selon la revendication 14 caractérisé en ce que les douilles d'introduction (18, 19) sont fabriquées en céramique résistant à l'usure.

16. Dispositif selon la revendication 1 caractérisé en ce que le matériau de matrice est ajouté latéralement dans le canal d'imprégnation (11) au travers de l'enveloppe d'imprégnation (1) pour l'imprégnation des ensembles de fibres (10, 10').

17. Dispositif selon la revendication 1 caractérisé en ce que le matériau de matrice est introduit par l'intermédiaire d'un système répartiteur de masse (28') relié au canal d'imprégnation (11) pour la répartition uniforme sur la périphérie du canal d'imprégnation (11).

18. Dispositif selon la revendication 17 caractérisé en ce que le matériau de matrice est ajouté directement en forme d'ouverture annulaire par le biais de l'un des anneaux élargisseurs (9').

19. Dispositif selon la revendication 1 caractérisé en ce qu'un canal d'introduction (29) est pratiqué dans le noyau d'imprégnation (2) pour la coextrusion d'une couche de noyau (32), le canal d'introduction (29) répartissant uniformément le matériau de matrice autour du corps déplaceur (33).

20. Dispositif selon la revendication 1 caractérisé en ce qu'un canal d'introduction (28), auquel fait suite un système répartiteur de masse (28'), est formé au niveau du côté de la sortie de la tête d'imprégnation pour la coextrusion d'une couche d'enveloppe (31).

21. Procédé de production de masses de matière synthétique renforcées par des fibres longues au moyen du dispositif d'imprégnation selon l'une des revendications précédentes où la tête d'imprégnation (35) est reliée à une extrudeuse à un ou deux fourreaux (38) et où les ensembles de fibres (10, 10') préimprégnés dans la tête d'imprégnation (35) sont introduits dans l'extrudeuse (38) et sont incorporés dans la masse visqueuse de matière synthétique.

22. Procédé selon la revendication 21 caractérisé en ce que des couches de noyau et d'enveloppe coextrudées supplémentaires (32, 31) en une matière synthétique non renforcée ou renforcée par des fibres sont appliquées au moyen du dispositif d'imprégnation selon l'une des revendications précédentes.

23. Procédé selon la revendication 22 caractérisé en ce qu'une substance supplémentaire (67) destinée à être entourée par les ensembles de fibres (10, 10') est tirée conjointement au centre du noyau d'imprégnation (2).

24. Procédé selon la revendication 23 caractérisé en ce que la substance supplémentaire (67) à entourer est un noyau de mousse.

25. Procédé selon la revendication 21 caractérisé en ce que des profilés renforcés par des fibres produits à partir de la masse de matière synthétique sont coupés en granulés dans une étape subséquente, une multiplicité de filaments individuels des fibres de renfort étant disposés parallèlement dans une matrice du matériau thermoplastique et la longueur des fibres étant égale à la longueur des granulés.
